(19) Europäisches Patentamt / European Patent Office / Office européen des brevets

(11) **EP 2 158 814 B1**

(12) **EUROPEAN PATENT SPECIFICATION**

(45) Date of publication and mention
of the grant of the patent:
**21.08.2013 Bulletin 2013/34**

(51) Int Cl.:
*A23B 4/09* (2006.01)       *A23L 1/317* (2006.01)
*A23L 3/375* (2006.01)

(21) Application number: **08163523.7**

(22) Date of filing: **02.09.2008**

(54) **Method of Chilling Food Products in Food Mixer**

Verfahren zur Kühlung von Lebensmittel in einem Essensmixer

Procédé pour le refroidissement de produits alimentaires dans un mixer alimentaire

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**03.03.2010 Bulletin 2010/09**

(73) Proprietor: **Air Products and Chemicals, Inc.
Allentown, PA 18195-1501 (US)**

(72) Inventors:
• **Guignard, Laurent
35740, Pacé (FR)**
• **Crenault, Patrick
35740, Pacé (FR)**
• **Colleu, Gwénaël
75018, Paris (FR)**

(74) Representative: **Schwabe - Sandmair - Marx
Patentanwälte
Stuntzstraße 16
81677 München (DE)**

(56) References cited:
EP-A- 0 923 883         WO-A-98/57106
WO-A-02/057697      DE-A1- 3 347 937
US-A- 4 314 451        US-A- 5 728 417
US-A- 5 732 559        US-B1- 6 228 172

• **BUCHMÜLLER J ET AL ISBN 1-85166-253-7:
"Liquid nitrogen. A versatile cooling agent in
comminution and mixing processes."
FLEISCHWIRTSCHAFT 1989 MESSER
GRIESSHEIM GMBH, FÜTINGSWEG 34, D-4150
KREFELD, FEDERAL REPUBLIC OF GERMANY,
vol. 69, no. 4, 1989, pages 597-598, XP008101150**
• **GARNREITER F ISBN 0-309-03743-3: "Liquid
nitrogen as a cooling agent in the cutter (LINKUT
process)." FLEISCHWIRTSCHAFT 1988 LINDE
AG, D-8023 HÖLLRIEGELSKREUTH, FEDERAL
REPUBLIC OF GERMANY, vol. 68, no. 5, 1988,
pages 617-618, XP008101148**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

It has been an industry practice to produce food products such as meat patties in the form of burgers and other meat shapes out of many small pieces. In order to generate the larger patties from the small pieces of meat the pieces are added to a cryogenic food mixing machine such as a vacuum tumbler or blender and at least a portion is cooled to a preselect temperature below the freezing point of water. The freezing point of the meat pieces in this processing equipment is typically accomplished with cryogens such as liquid nitrogen spray inside of the blender or vacuum tumbler

Liquid nitrogen constitutes a significant component of the overall cost of producing formed meat products. Another component in the overall cost of the process is that of waste. Too little cryogen may result in the small ground pieces of meat not adhering in patty form thus resulting in waste or result in the necessity of reprocessing. Too much of the cryogenic coolant may allow for excellent adhesion for patty formation but it also results in increased processing cost.

Several methods have been used to determine the amount of cryogen, e.g., liquid nitrogen, to be added to the blender to achieve a desired texture of chilled meat product: (1) chill time, (2) operator judgment based upon the sound of the product tumbling around inside the tumbler or blender drum, and (3) the temperature of the product. Each of these methods has their problems vis-à-vis the accurate measurement of cryogen to be used in the process. The following references are illustrative of approaches to meat product formation using cryogens:

US 3,607,313 discloses a process for applying an edible coating to a quick frozen food pieces. A liquid coating is injected into the freezer and frozen when in contact with the frozen pieces of food or meat.

US 4,314,451 discloses a method of chilling meat products by controlling the temperature of a cryogenically refrigerated product. In this process the product is chilled in a blender having a rotatable impellor driven by an electric motor. Liquid nitrogen is introduced into the blender and the electrical power is sensed. The load on the impellor is measured and the sensed load is assumed to be indicative of product viscosity which is correlated to the temperature of the mixed meat product.

US 5,728,417 discloses an improved control method for determining the amount of cryogen that is to be mixed into meat products for achieving a desired consistency for forming products such as meat patties. The patent discloses the prior art use of chill time as one approach and operator control based upon the sound of the product tumbling inside the blender as another approach. Their improvement to the problem resided in measuring the product temperature and measuring the time it takes to reach an initial freezing temperature while in the food mixer. Mixing of the food product is continued until the food product has reached a forming point stiffness A second portion of food product is added to the blender and mixing of the combined blend is continued for an elapsed time based upon the formula $T_{f2}=T_{i2} \times T_f/T_i$.

US 6,007,859 discloses a method of coating a meat product with a liquid coating material. In the coating method the mass of product in the cooling chamber is measured and the mass of the liquid cryogen necessary to reduce the temperature of the meat product to a predetermined temperature below the melting temperature of the liquid coating is calculated. The calculated mass of cryogen is added to the chamber under controlled conditions in an amount to reach a first preselected temperature Then, a predetermined mass of coating material is applied to the cooled product. If additional layers of coating are required, the process is repeated.

US 5,732,559 discloses a cryogenic control system which measures rotational resistance in a cryogenic food making machine to determine by test the length of time it takes from the start of chilling to reach a maximum energy level and the length of time it takes to chill the product to the desired forming point stiffness to establish a ratio for that product and batch size. This ratio can then be used for subsequent cycles, regardless the cryogenic flow rate, to determine the optimum product chilling point.

US 6,228,172 discloses an apparatus for coating a food product with a liquid or liquefied coating material. The apparatus comprises a cooling chamber with a mass of product being measured in the cooling chamber. A mass of liquid cryogen is calculated and introduced into the cooling chamber to reduce the temperature of the mass of the product to a first pretermined temperature below the melting point temperature of the coating material.

The Article "Liquid nitrogen. A versatile cooling agent in comminution and mixing processes." by Buchmüller et al., Fleischwirtschaft, vol. 69, no. 4, 1989, pages 597 to 598, discloses a method of making sausage emulsion or hot meat granulate using liquid nitrogen. The Article states that if liquid nitrogen is used for cooling a precise temperature pattern can be established in the cutter so that the best comminution time can be chosen without the composition or quality of the mixture being negatively affected by a rise in temperature.

The existing solutions as described above, e.g., injection based on time or shaft torque measurement, assume that there is reliable correlation between injection time and between texture and shaft torque. Reliability has been a problem. Injection of liquid nitrogen based upon time lacks reliability as it requires very stable LIN conditions (pressure, temperature): the cooling duty can vary because of pressure and level variations, subcooling after storage refilling, cooling down of the LIN supply, etc. Finally, the temperature method of controlling injection of liquid cryogen has not been a reliable method for chilling meat products primarily because the temperature of the frozen meat cells is exactly the same as the temperature of the unfrozen meat cells. Accordingly, the texture or viscosity of the meat product may differ from batch to batch even though the temperature of the meat product is at the preselected level.

Other problems also exist with respect to chilling meat for processing into formed products such as burger patties. For example different meat products chill at different rates. Chilling requirements may vary because of the type of burger patty to be formed. Because, meat products do not mix the same and all tumbler designs do not mix the products the same, the cryogenic liquid cannot be injected into all meat products at the same rate. If the cryogenic is injected too fast, it will over-freeze pockets in the batch creating "cold spots".

BRIEF SUMMARY OF THE INVENTION

The present invention generally relates to a process for chilling food products in a tumbler or blender using a cryogenic liquid as a refrigerant including a control system that allows for the introduction of appropriate levels of cryogenic coolant. The process is primarily designed for chilling food products, such as meat products, which are subsequently converted to shaped products, such as the formed burger patties, and comprises the steps:

(a) measuring the mass of food product to be chilled in said blender;
(b) measuring the mass (XM) of frozen food product to be added to said blender ;
(c) calculating the amount (Y) of cryogenic liquid to be added to said blender to chill the mass (M) of food product added to said blender in steps (a) and (b) to a preselected first temperature,
wherein the calculation of the amount (Y) of cryogenic liquid is based upon a control system incorporating inputs based on an algorithm:

$$Y = M(-aX + b)$$

where M is the total mass of food product to be chilled,
a and b are constant values with $0.2 \leq a \leq 2.0$ and $0.1 \leq b \leq 1.0$,
and X is the ratio of frozen food product to total mass (M) of food product to be chilled;
(d) increasing the calculated amount of cryogenic liquid to be added to said blender derived in step (c) by a predetermined value kM to deliver a chilled product of preselect viscosity as the size or weight of the shaped product decreases, where k is a correction factor based upon the number of shaped product formed per pound of food product having a value from greater than zero to less than or equal to 0.15;
(e) and introducing the cryogenic liquid to said blender in staged or cycled increments.

Several advantages can be achieved by the practice of this invention and these include one or more of the following:

(a) an ability to correlate the amount of cryogenic liquid necessary to achieve a desired texture of food product for shape formation;

(b) an ability to produce burger patties from ground meat which have excellent consistency and adhesion; and

(c) an ability to tailor the chilling process to produce meat products, and particularly burger patties of consistent size and shape.

DESCRIPTION OF THE DRAWING

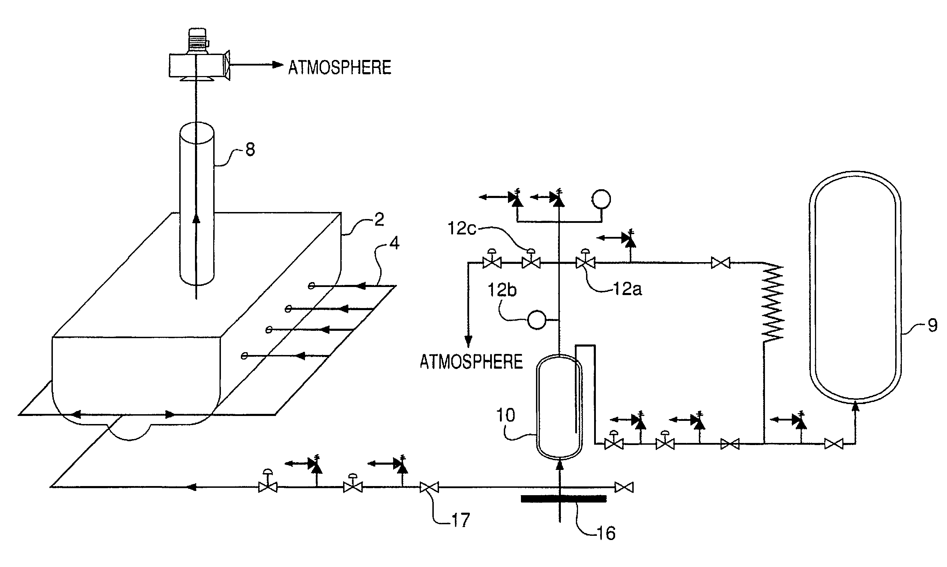

Figure 1 shows a flow diagram of a system for chilling food products for subsequent conversion into shaped products. Liquid nitrogen may be used as a coolant and delivered to a food blender.

DETAILED DESCRIPTION OF THE INVENTION AND EXAMPLES

Considerable markets have been developed for the off-site production of shaped food products, and particularly burger patties particularly for use in the fast food and casual restaurant industries. The production of shaped food products particularly meat products, such as ground beef, pork, chicken and fish has required the implementation of meat mixing equipment that can provide consistent and repeatable rapid cooling and freezing of the meat product for conversion to shaped products. Such consistency is required particularly for producing burger and sausage patties having uniform weight and sufficient adhesion to maintain their shape without meat falloff. The sensitivity of ground beef to fall off is particularly noticeable in the type of patty to be produced.

Food product and meat product producers in particular generally use a cryogenic fluid such as liquid nitrogen (LIN) optionally with carbon dioxide for chilling the ground raw meat down to a preselect temperature which is below the freezing point of water prior to burger formation. Typically this preselect temperature is around -0.5 to -0.9°C The target for chilling the food product, e.g., ground meat is one of achieving an optimum texture for forming the burger patty while minimizing material losses and avoiding excessive cryogenic usage.

To facilitate an understanding of the invention, including the delivery system for food processing, reference is made to the drawing. The food processing system shown in Figure 1 is comprised of a blender 2, having a plurality of liquid nitrogen (LIN) injectors 4 placed at strategic locations in blender 2. The use of liquid nitrogen as a cryogenic fluid has significant advantages in that it reduces fat breakdown and bacterial growth in the processing of the meat product. As liquid nitrogen is introduced to blender 2 it is vaporized and the resulting vapour is exhausted via vent 8.

The LIN delivery system for blender 2 is comprised of a LIN storage vessel 9 and buffer tank 10 which is downstream for LIN storage vessel 9 and upstream from blender 2. An accurate electronic pressurization system is necessary for precise delivery of amounts of LIN and the system is controlled by a plurality of sensors and valves indicated by numerals 12, 12a and 12b. Buffer tank 10 includes a phase separator 14 and the interior weight of the LIN in buffer tank 10 is ascertained by a load sensor 16, e.g., a platform scale which may be moved into position when necessary. By virtue of weighing the liquid nitrogen in buffer tank 10, which is isolated from LIN storage vessel 9, via load sensor 16 one can achieve and deliver a very precise mass of LIN to blender 2 via line train 17. Thus, by using this method of delivering liquid nitrogen to blender 2 it is possible to achieve excellent repeatability of the chilling process even if the pressure of the LIN changes in LIN storage vessel 9.

The principle of the chilling system is to chill a certain amount of meat product inside a blender to a preselect temperature and preselect texture by injection of a cryogenic fluid controlled in a manner to deliver the required mass of liquid cryogenic fluid. Cycled delivery of precise amounts of LIN reduces the formation of cold pockets, i.e., pockets which become completely frozen resulting in the use of excess cryogenic. Cycling or staging of the flow of LIN on and off allows the batch to chill more evenly.

A second key to the invention resides in determining the amount of liquid nitrogen to be delivered to blender 2 to achieve a food product having a preselect temperature and texture. It is known for example that the amount of liquid nitrogen to be used in the process varies from batch to batch; the amount also varies with respect to meat composition, and in proportion to the amount of fresh to frozen meat added to the blender. It has been found that another process variation which affects the amount of liquid nitrogen necessary for achieving adequate chilling in the blender includes the shape and size of the burger patty to be produced. Preselect textures are necessary for achieving consistency in burger patty adhesion and maintaining shape.

To facilitate the implementation of the process, a software algorithm has been developed which affords an automatic calculation of required amounts of liquid nitrogen to be delivered to blender 2 to achieve a preselect temperature and preselect texture of meat product as one moves from batch to batch. And, with the delivery system employed as described in the drawing, precise amounts of LIN are actually delivered via a control system incorporating an algorithm in the software of the control system.

The control system requires inputs based upon the equation:

$$Y = M(-aX + b + k)$$

where a and b are constant values and k is a correction factor based upon the shape and size of the product to be produced.

To employ the control system using ground beef, which is subsequently converted to a stamped patty form as an example, the mass of the meat (M) at temperature $T^1$ including both frozen and fresh to be added to the blender is determined and inputted into the control system. The ratio (X) of frozen meat at temperature $T_f$ to fresh meat is preselected and inputted into the control system. In addition, a provision is made in the control system for the burger shape and size to be formed downstream in the stamping process, e.g., the number of burger patties to be formed per pound of the resulting chilled mass of meat. The value of (k) is approximated and, then based upon observation, is adjusted to offer better control. The value (k) is inputted into the control system to provide for a preselect texture necessary for burger patty to be formed. Software in the control system then calculates the total weight of liquid nitrogen to be cycled to the blender to achieve the correct meat texture for the type of burger patty to be formed. Optimization consists in defining the correct (k) value for each burger type. With burger patties, the value of (k) increases as the weight of the patty decreases. For example, a value of (k) may be from 1-3% for a burger patty of the size of 3-4 patties per pound of meat product and the value (k) value may be from 8-10% based upon burger patty sizes of 10 patties per pound of product.

In practice the constants (a) and (b) provide the basis for calculating the amount of liquid nitrogen necessary for cooling the mass of the food product (M) at temperature $T^1$ to a preselect temperature. Changes in the food product from batch to batch, e.g., hamburger to fish to chicken to sausage, results in the use of differing values for the constants (a) and (b) as the heat capacities are different for differing products. The constant (a) is preferably selected from the range of 0.2 to 2.0, the constant (b) is selected preferably from the range of 0.1 to 1.0. In preferred embodiments a ≥ b, even more preferred a > b. The value (k) allows for the increase in the amount of cryogen added to the blender to provide for the desired texture necessary to produce the shape of the food product to be produced.

The standard process would be:

- The operator fills the blender with a mass of meat M containing a certain percentage X of frozen meat at an initial temperature $T^1$.
- The operator enters the total mass of meat (M), the ratio of frozen meat to fresh meat (X); and
- The operator enters the constants (a) (b) and (k) which result in the appropriate texture necessary for the type of burger to be formed downstream of the blender into the control system. Typically, the value of (k) varies with respect to the number of burger patties to be formed per pound of meat product.
- The control system advantageously calculates the amount of LIN to inject inside the blender based upon the algorithm and optimally, the control system delivers the calculated LIN to the blender from buffer tank 10. Optimization consists in defining the correct (k) value for each burger type.

Calculation example of the control system software using sample constants:

- Mass of meat to cool down to get the right texture (M) : 1000 kg
- Percentage of frozen products in the mass of meat (X) : 20%
- Type of burger: 10/1 (small burger)
- k for this type of burger, typically : 10%
- constant value a : 0.5
- constant value b : 0.2

LIN mass (Y) calculated with the formula: Y = M(-aX + b + k):
Y=200 kg where M is 1000, X=0.2, and (k) =0.1.

The following example provides an illustration of the chilling process for burger patty formation based upon a various ratios of burger patties formed per pound of meat product Such ratios from 3:1 to 10:1 of burger patties per pound of meat increases the complexity of the meat formation process as the texture of the meat product must be stiffer than lower ratios of burger patties per pound of meat product and thus the need for the inclusion of the constant (k) in the algorithm.

Example 1

In this example, the specifications in meat processing call for freezing only a portion of the meat product, e.g., 35-40% of the meat in order to get the product stiff enough, i.e., the correct texture, to stamp into patties. In this example fresh meat with up to 30 % frozen meat is added to achieve a fat content between 19 and 20 %. To start trials inputs are made to the control system that allows for the calculation of the amount of LIN necessary for subsequent product formation. Under the conditions of this example, $T_1$ was +7 °C, the temperature of frozen meat was -12 °C and the preselect final temperature was -0.9 °C. Based upon heat capacities of the meat, frozen meat and heat losses, etc., the calculations resulted in a value of 0.5 for (a) and 0.2 for (b). A few trials based on these calculations can afford a better approximation for the theoretical values of (a) and (b) as these trials allow for corrections associated with errors in mass transfer estimates and heat losses.

Initial inputs are based upon the software algorithm set forth below:

$$Y = M (-aX + b)$$

where Y is the LIN demand (kg) which is determined from the software program based upon inputs for M which is the total mass of meat (kg), and X is the ratio of frozen meat mass to M, a = 0.5 and b = 0.2. Based upon a projected chill time of 20 seconds injection for meat products containing 30 % frozen meat and 2 min 30 seconds for meat products comprised only of 500kg fresh meat, an instantaneous LIN flow requirement of 0.2 * 500 * 60 / 2.5 = 2400 kg/h or 40 kg/min. A provision was also provided in the software for the control system for an input of a constant (k) to allow for the generation of a meat product having a preselect temperature.

Table 1 sets forth test conditions and results Burger types were based upon patties from 3 patties per pound of meat product (3/1) to 10 burger patties per pound of meat product (10/1) Fresh meat was at conventional refrigeration temperature.

Table 1

| Run | Burger type | M (kg) | X (%) | Value Of k | Y (kg) | Inject. time (sec) | End temp. (°C) |
|-----|-------------|--------|-------|------------|--------|--------------------|----------------|
| 1 | 4/1 | 293 | 26 | | 21 | 40 | -0.8 |
| 2 | 4/1 | 293 | 26 | | 23 | 45 | -0.9 |
| 3 | 3/1 | 378 | 0 | | 75 | 140 | -0.9 |
| 4 | 3/1 | 321 | 0 | | 65 | 105 | -0.9 |
| 5 | 3/1 | 358 | 0 | 4.3% | 73 | 130 | -0.9 |
| 6 | 3/1 | 291 | 0 | | 60 | 105 | -0.9 |
| 7 | 10/1 | 193 | 10 | | 34 | 70 | -0.9 |
| 8 | 10/1 4/1 | 296 | 15 | | 45 | 90 | -0.9 |
| 9 | 10/1 4/1 | 346 | 15 | | 53 | 105 | -0.9 |
| 10 | 10/1 | 332 | 0 | | 81 | 160 | -0.9 |
| 11 | 10/1 | 345 | 0 | 4.3% | 84 | 150 | -0.9 |

CONCLUSIONS

$$\text{Calculations for Run 1 } Y = 293(-0.5 * .26 + 0.2) = 21 \text{ kg.}$$

$$\text{Calculations for Run 11 } Y = 345(0 + .2 + 0.043) = 84 \text{ kg.}$$

The above trials have shown that at least for the smallest burgers (10/1) a correctional factor (k) is advantageously supplied to the control system to obtain a chilled meat product which affords proper results on formation of the burger patty. All the burgers produced were well shaped. The texture, as determined by the operator, was good for the 3/1 and 4/1 and not hard enough (not frozen solidly enough) for the 10/1 to have exactly the same comportment. A 10/1 burger patty is so thin that the chilled meat needs to be harder (solidly frozen) to maintain the shape in the patty after the stamping process.

The value of (k) is further adjusted depending on the product type, fat content, water content, consistency and size of the stamped patty, moulded or extruded food product or the like. For the correction factor (k) values greater than zero and less than or equal to 15% are preferred. Even more preferred are values of at least 4%.

**Claims**

1. A process for chilling food products suited for subsequent shape formation in a tumbler or blender (2) using a cryogenic liquid as a refrigerant which comprises the steps:

   (a) measuring the mass of food product to be chilled in said blender (2);
   (b) measuring the mass (XM) of frozen food product to be added to said blender (2);
   (c) calculating the amount (Y) of cryogenic liquid to be added to said blender (2) to chill the mass (M) of food product added to said blender in steps (a) and (b) to a preselected first temperature,
   wherein the calculation of the amount (Y) of cryogenic liquid is based upon a control system incorporating inputs based on an algorithm:

$$Y = M(-aX + b)$$

where M is the total mass of food product to be chilled,
a and b are constant values with $0.2 \leq a \leq 2.0$ and $0.1 \leq b \leq 1.0$,
and X is the ratio of frozen food product to total mass (M) of food product to be chilled;
(d) increasing the calculated amount of cryogenic liquid to be added to said blender (2) derived in step (c) by a predetermined value kM to deliver a chilled product of preselect viscosity as the size or weight of the shaped product decreases where k is a correction factor based upon the number of shaped product formed per pound of food product having a value from greater than zero to less than or equal to 0.15;
(e) and introducing the cryogenic liquid to said blender (2) in staged or cycled increments.

2. The process of Claim 1 wherein the food product is meat.

3. The process of Claim 1 or 2 wherein the shape of the food product is a patty.

4. The process of any of the Claims wherein the shaped food product is patties.

5. The process of any of the Claims wherein the shaped product is patties formed of ground beef and the size is 10 burger patties per pound of meat.

6. The process of any of the claims which furthermore comprises the steps:

(i) inputting the mass of food product to be chilled in said blender (2) into a control system for said process;
(ii) inputting the mass (XM) of frozen food product to be added to said blender (2) into said control system;
(iii) inputting the correction factor (k) into said control system that adjusts the amount of cryogenic liquid to be added to said blender (2) necessary to deliver a chilled product of preselect viscosity;
(iv) delivering the amount of cryogenic liquid determined by said control system to said blender (2);
(v) and introducing the cryogenic liquid to said blender (2) in staged or cycled increments.

7. The process of any one of the Claims wherein liquid nitrogen is used as the cryogenic liquid.

8. The process of any one of the Claims wherein the value of the correction factor (k) is at least 4% and preferably at most 10%.

9. The process of any one of the Claims wherein the chilled product is shaped into a plurality of shaped products of equal size or weight, and the value of the correction factor (k) increases with the number of shaped products formed per pound of food product.

**Patentansprüche**

1. Verfahren zum Kühlen von Lebensmittelprodukten geeignet für eine anschließende Formbildung in einem Trommelmischer oder Mixer (2) unter Verwendung einer kryogenen Flüssigkeit als Kühlmittel, welches die Schritte umfasst:

(a) Messen der Masse des Lebensmittelprodukts, welches in dem Mixer (2) gekühlt werden soll;
(b) Messen der Masse (XM) des gefrorenen Lebensmittelprodukts, welches dem Mixer (2) zugefügt werden soll;
(c) Berechnen der Menge (Y) der kryogenen Flüssigkeit, welche dem Mixer (2) zugefügt werden soll, um die Masse (M) des Lebensmittelprodukts, welches dem Mixer in den Schritten (a) und (b) zugefügt wird, auf eine vorgewählte erste Temperatur zu kühlen,
wobei die Berechnung der Menge (Y) der kryogenen Flüssigkeit auf einem Kontrollsystem basiert, welches Eingaben basierend auf einem Algorithmus:

$$Y = M(-aX + b)$$

einbezieht,

wobei M die Gesamtmasse des Lebensmittelprodukts ist, welches gekühlt werden soll,

a und b konstante Werte mit $0{,}2 \leq a \leq 2{,}0$ und $0{,}1 \leq b \leq 1{,}0$ sind,

und X das Verhältnis von gefrorenem Lebensmittelprodukt zur gesamten Masse (M) des Lebensmittelprodukts ist, welches gekühlt werden soll;

(d) Erhöhen der berechneten Menge der kryogenen Flüssigkeit, welche dem Mixer (2) zugefügt werden soll, abgeleitet in Schritt (c) durch einen vorbestimmten Wert kM, um ein gekühltes Produkt einer vorgewählten Viskosität bereitzustellen, wenn die Größe oder das Gewicht des geformten Produkts abnimmt,

wobei k ein Korrekturfaktor ist, welcher auf der Anzahl von geformten Produkten gebildet pro Pfund des Lebensmittelprodukts basiert, mit einem Wert von größer 0 bis weniger oder gleich 0,15;

(e) und Einführen der kryogenen Flüssigkeit in den Mixer (2) in abgestuften oder zyklischen Schrittgrößen.

2. Verfahren nach Anspruch 1, wobei das Lebensmittelprodukt Fleisch ist.

3. Verfahren nach Anspruch 1 oder 2, wobei die Form des Lebensmittelprodukts ein Bratling ist.

4. Verfahren nach einem der Ansprüche, wobei das geformte Lebensmittelprodukt Bratlinge ist.

5. Verfahren nach einem der Ansprüche, wobei das geformte Produkt Bratlinge ist, welche aus gemahlenem Fleisch gebildet sind, und die Größe 10 Burgerbratlinge pro Pfund Fleisch ist.

6. Verfahren nach einem der Ansprüche, welches ferner die Schritte umfasst:

(i) Eingeben der Masse des Lebensmittelprodukts, welches in dem Mixer (2) gekühlt werden soll, in ein Kontrollsystem für diesen Prozess;

(ii) Eingeben der Masse (XM) des gefrorenen Lebensmittelprodukts, welches dem Mixer (2) zugegeben werden soll, in das Kontrollsystem;

(iii) Eingeben des Korrekturfaktors (k) in das Kontrollsystem, welches die Menge der kryogenen Flüssigkeit einstellt, welche dem Mixer (2) zugefügt werden soll, die notwendig ist, um ein gekühltes Produkt mit einer vorgewählten Viskosität bereitzustellen;

(iv) Bereitstellen der Menge der kryogenen Flüssigkeit gegenüber dem Mixer (2), welche durch das Kontrollsystem bestimmt wird;

(v) und Einführen der kryogenen Flüssigkeit in den Mixer (2) in abgestuften oder zyklischen Schrittgrößen.

7. Verfahren nach einem der Ansprüche, wobei flüssiger Stickstoff als kryogene Flüssigkeit verwendet wird.

8. Verfahren nach einem der Ansprüche, wobei der Wert des Korrekturfaktors (k) zumindest 4 % und bevorzugt höchstens 10 % ist.

9. Verfahren nach einem der Ansprüche, wobei das gekühlte Produkt in eine Vielzahl von geformten Produkten gleicher Größe oder Gewicht geformt wird, und der Wert des Korrekturfaktors (k) mit der Anzahl der geformten Produkten, welche pro Pfund des Lebensmittelprodukts gebildet werden, ansteigt.

**Revendications**

1. Un procédé pour le refroidissement de produits alimentaires appropriés à un façonnage ultérieur dans un tambour ou un mélangeur (2), en utilisant un liquide cryogénique comme réfrigérant, qui comprend les étapes:

a) de détermination de la masse du produit alimentaire à refroidir dans ledit mélangeur (2);

b) de détermination de la masse (XM) du produit alimentaire congelé à ajouter audit mélangeur (2);

c) de calcul de la quantité (Y) de liquide cryogénique à ajouter audit mélangeur (2) pour refroidir la masse (M) du produit alimentaire ajouté audit mélangeur au cours des étapes a) et b) à une première température présélectionnée,

dans lequel le calcul de la quantité (Y) de liquide cryogénique est basé sur un système de commande incorporant des entrées fondées sur un algorithme:

$$Y = M(-aX + b)$$

dans lequel M est la masse totale de produit alimentaire à refroidir,

a et b sont des valeurs constantes avec $0,2 \leq a \leq 2,0$ et $0,1 \leq b \leq 1,0$,

et X est le rapport entre le produit alimentaire congelé et la masse totale (M) du produit alimentaire à refroidir;

d) d'augmentation de la quantité calculée de liquide cryogénique à ajouter audit mélangeur (2), établie lors de l'étape c) d'une valeur prédéterminée kM, en vue d'obtenir un produit refroidi présentant une viscosité présélectionnée pendant que la taille ou le poids du produit façonné diminue,

dans laquelle k est un facteur de correction basé sur le nombre de produits façonnés par livre de produit alimentaire présentant une valeur allant de plus grand que zéro à moins que ou égal à 0,15;

e) et d'introduction du liquide cryogénique dans ledit mélangeur (2) par incréments échelonnés ou séquencés.

2. Le procédé de la revendication 1, dans lequel le produit alimentaire est de la viande.

3. Le procédé de la revendication 1 ou 2, dans lequel la forme du produit alimentaire est une galette.

4. Le procédé de l'une quelconque des revendications dans lequel le produit alimentaire façonné est des galettes.

5. Le procédé de l'une quelconque des revendications dans lequel le produit façonné est des galettes formées de boeuf haché et la taille est de 10 galettes de hamburger par livre de viande.

6. Le procédé de l'une quelconque des revendications comprenant en outre les étapes :

i) d'entrée de la masse de produit alimentaire à refroidir dans ledit mélangeur (2) dans un système de commande pour ledit procédé;

ii) d'entrée de la masse (XM) de produit alimentaire congelé à ajouter audit mélangeur (2) dans ledit système de commande;

iii) d'entrée du facteur de correction (k) dans ledit système de commande, qui ajuste la proportion de liquide cryogénique à ajouter audit mélangeur (2) nécessaire pour obtenir un produit refroidi présentant une viscosité présélectionnée;

iv) d'acheminement de la quantité de liquide cryogénique déterminé par ledit système de commande audit mélangeur (2);

v) et d'introduction du liquide cryogénique dans ledit mélangeur (2) par incréments échelonnés ou séquencés.

7. Le procédé de l'une quelconque des revendications, dans lequel de l'azote liquide est utilisé comme liquide cryogénique.

8. Le procédé de l'une quelconque des revendications, dans lequel la valeur du facteur de correction (k) est d'au moins 4 % et, de préférence, de 10 % au plus.

9. Le procédé de l'une quelconque des revendications, dans lequel le produit refroidi est formé en un grand nombre de produits façonnés de taille ou de poids identique, et la valeur du facteur de correction (k) augmente avec le nombre de produits façonnés, formés par livre de produit alimentaire.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3607313 A
- US 4314451 A
- US 5728417 A
- US 6007859 A
- US 5732559 A
- US 6228172 B

**Non-patent literature cited in the description**

- **BUCHMÜLLER et al.** Liquid nitrogen. A versatile cooling agent in comminution and mixing processes. *Fleischwirtschaft,* 1989, vol. 69 (4), 597-598